# EUROPEAN PATENT APPLICATION

(11) **EP 3 822 764 A1**
(43) Date of publication of application: **19.05.2021**
(21) Application number: 19209107.2
(22) Date of filing: 14.11.2019
(51) Int. Cl.: G06F 3/12, G03G 15/23

(54) **METHOD FOR CONTINUING A DOUBLE-SIDED ROLL-TO-ROLL PRINTING PROCESS AFTER THE OCCURRENCE OF AN ERROR, ROLL-TO-ROLL PRINTER AND PRINTER CONTROLLER**

(71) Applicant: Canon Production Printing Holding B.V., 5914 HH Venlo (NL)
(72) Inventor: ROOS, Mathieu, 5914 HH Venlo (NL); CONARD, Didier, 5914 HH Venlo (NL); VALICA, Vlad, 5914 HH Venlo (NL); ROUMIER, Valérie, 5914 HH Venlo (NL); TREMBLAY, Christian, 5914 HH Venlo (NL)
(74) Representative: Canon Production Printing IP Department

(57) **Abstract**

The invention provides a method for continuing, after the occurrence of an error, printing on a medium roll (10) in a roll-to-roll printer in a double-sided roll-to-roll printing process. According to this method, graphical position markers (30-i) are printed onto a first side (1) of a medium roll (10) in a double-sided roll-to-roll printing process in addition to the images (20-i) according to the print job. When an error such as a paper jam occurs, during printing on the first side of the medium roll and/or during printing of the second side of the medium roll, then at least one piece of information is extracted from the graphical position markers (30-i) in order to ensure that the images printed on the second side (2) of the medium roll (10) are printed in registration with the corresponding images (20-i) printed on the first side (1) of the medium roll (10). Methods are provided both for recovering after an error during printing on the first side and after an error during printing on the second side. In addition, a system, a roll-to-roll printer, and a printer controller as well as a computer program product and a data storage medium configured for performing said methods are provided.

## Description

### FIELD OF THE INVENTION

The present invention pertains to a method for continuing, after the occurrence of an error, printing on a medium roll in a roll-to-roll printer in a double-sided roll-to-roll printing process; to a printer controller configured to perform said method; to a roll-to-roll printer comprising said printer controller; as well as to a computer program product and a data storage medium comprising executable code for performing said method.

### BACKGROUND ART

Roll-fed printers are a well-known type of printers. In roll-fed printers, a recording medium such as paper is wound up on an input roll and then fed as a medium roll into, and guided along, a path through the printer, unwinding the input roll by and by along the process. In this way, the recording medium is roll-fed (i.e. taken from a roll and fed) to a marking unit (e.g. a print head) of the printer which applies a marking material (i.e. ink or toner) onto the recording medium

Roll-to-roll printers are a common type of roll-fed printers and are characterized in that the recording medium is, after images have been printed on it, wound up on an output holder of an output roll by and by along the process.

For many print jobs or print products double-sided images, i.e. images having a printed front side image as well as a corresponding printed back side image, are desired. In order to achieve this using a roll-to-roll printer, a doubled-sided roll-to-roll printing process can be performed: herein, the front side images are printed in the usual way onto a first side of the medium roll, then the medium roll is turned over and fed again into the roll-to-roll printer such that the back side images can be printed onto the second side of the medium roll. The previously trailing edge usually becomes now the leading edge and vice versa.

Care has to be taken that the front side images and back side images are printed in registration with each other on the respective sides, i.e. such that the front side image of each double-sided image perfectly fits the corresponding back side image.

A registration error, e.g. the back side images being shifted by a few millimeters with respect to the front side images, usually leads to the complete printing process having to be repeated from the beginning which results in considerable waste and considerable costs.

Modern roll-to-roll printers have precise and accurate control over where on a medium roll an image is printed. However, sometimes errors occur during the printing process. For example, a nozzle of a print head of an inkjet printer may be blocked, the print head may touch the medium resulting in smudges or smears, or a paper jam may occur. In particular in the case of a paper jam, usually a damaged (or: compromised) section of the medium has to be removed as a creased or even torn medium is likely to cause additional problems if it is left to move within the roll-to-roll printer.

In many cases, it is unavoidable that an image in the damaged or compromised section of the medium roll is lost. It is then usually re-scheduled to be printed on another medium roll. However, removing the section from the medium roll poses the problem that the properties of the remaining medium roll and/or the layout of the images on one or both sides after the removal may be unknown to the roll-to-roll printer such that a precise registration of front images with their respective back images becomes difficult if not impossible.

### SUMMARY OF THE INVENTION

It is one of the objects of the present invention to provide a method for continuing a double-sided roll-to-roll printing process after the occurrence of an error and to maintain accurate registration of the front images with their respective back images, in particular after the occurrence of an error that requires the removal of a section of the medium roll.

The above objects are solved by the independent claims of the present invention.

According to a first aspect, the invention provides a method for continuing, after the occurrence of an error, printing on a medium roll in a roll-to-roll printer in a double-sided roll-to-roll printing process wherein first a first side of the medium roll is marked with marking material according to at least one print job and thereafter the medium roll is turned over and a second side of the medium roll is marked with marking material according to the at least one print job such that double-sided images are printed on the medium roll with both front side images and back side images,
comprising at least the steps of:
a) receiving at least one print job to be printed;
b) determining, based on the at least one received print job, a first layout of images to be printed on the first side of the medium roll,
   wherein the first layout of images comprises images to be printed on the first side of the medium roll according to the at least one print job as well as a plurality of graphic position markers indicating at least the position of the graphic position markers within the first layout;
c) printing at least one image according to the at least one print job on the first and/or the second side of the medium roll;
d) detecting, during printing, an occurrence of an error involving damage to a section of the medium roll and/or damage to at least one image on the section of the medium roll;
e) stopping printing after the detecting of the occurrence of the error;
f) removing a portion of the medium roll, thereby creating a separate first part of the medium roll with a new in-medium trailing edge of the medium roll and a separate second part of the medium roll with a new in-medium leading edge of the medium roll;
g) capturing a picture of at least part of at least one of the graphic position markers using an picture capturing device;
h) extracting at least one piece of information from the captured image;
i) continuing printing of the at least one print job on the medium roll after the stopping in step e), wherein at least printing on the second side of the medium roll is controlled and/or amended based on the at least one extracted piece of information.

Herein it shall be understood that the terms "front image" and "front side" as well as "back image" and "back side" are arbitrary designations used to distinguish the two sides, and the images printed thereon, from one another. Without loss of generality, the side that is marked first by the roll-to-roll printer shall be designated as the "front side" and the images thereon as "front side images" or "front images", whereas the side that is marked second, after the medium roll has been turned over, shall be designated as the "back side" and the images thereon as "back side images" or "back images". Instead of "front", in each case also "first" or "first-printed" may be used herein, and instead of "back", in each case "second" or "second-printed" may be used herein, depending on which terms best elucidate the concepts and ideas described herein.

According to a second aspect, the invention provides a printer controller configured to perform the method according to an embodiment of the first aspect of the present invention.

The printer controller may be realized in hardware, such as a circuit or a printed circuit board and/or comprising transistors, logic gates and other circuitry. Additionally or alternatively, the printer controller may be at least partially realized in terms of software. Accordingly, the printer controller may comprise, or be operatively coupled to, a processor and a memory storing a software or a firmware that is executed by the processor to perform the functions of the printer controller. Signals may be received by an input interface of the printer controller and signals that the processor of the printer controller creates may be outputted by an output interface of the printer controller. The printer controller may be implemented, at least partially, as a microcontroller, an ASIC, an FPGA and so on.

According to a third aspect, the invention provides a roll-to-roll printer comprising a printer controller according to an embodiment of the second aspect of the present invention.

According to a fourth aspect, the invention provides a system comprising a roll-to-roll printer (in particular according to an embodiment of the third aspect) and a printer controller according to an embodiment of the second aspect. The system may further comprise a picture capturing device that may be integrated into the roll-to-roll-printer or may be realized as a mobile device.

According to a fifth aspect, the invention provides a computer program product comprising executable program code configured to, when executed on a processor, perform the method according to an embodiment of the first aspect of the present invention.

According to a sixth aspect, the invention provides a non-transitory computer-readable data storage medium comprising executable program code configured to, when executed on a processor, perform the method according to an embodiment of the first aspect of the present invention.

Additional advantages, and the solution of additional problems, will be apparent from the subject-matter of the dependent claims as well as from the description and the drawings.

In some advantageous embodiments, the occurrence of the error is detected in step d) during printing on the first side of the medium roll; the method further comprising a step of:
k) attaching the in-medium trailing edge of the first part of the medium roll to the in-medium leading edge of the second part of the medium roll;
wherein in step i) the printing on the first side of the medium roll is continued after the attaching in step k), starting with any previously unsuccessfully printed images and including printing of at least one of the graphic position markers (in particular according to the first layout);
wherein in step g), after the attaching in step k), an image comprising at least partially at least one graphic position marker from the first part of the medium and at least partially at least one graphic position marker from the second part of the medium is captured using the picture capturing device;
wherein the at least one piece of information extracted in step h) comprises a distance between a last complete image printed on the first side of the medium roll before the stopping in step e) and a first complete image printed on the first side of the medium roll after the continuing of the printing in step i);
wherein the method further comprises the step of:
determining and/or amending a second layout of images to be printed on the second side of the medium roll taking into account the at least one piece of information extracted in step h) to fit a realized first layout of the images on the first side of the medium roll.

Determining or amending the second layout of images to be printed on the second side of the medium roll may be done by first determining an amended first layout of the images on the first side of the medium roll based on the at least one piece of information extracted in step h); and subsequently deriving the second layout of images to be printed on the second side of the medium roll from the amended first layout. Alternatively, the distance between a last complete image printed on the first side of the medium roll before the stopping in step e) and a first complete image printed on the first side of the medium roll after the continuing of the printing in step i) is applied directly to the second layout to obtain an amended second layout.

The method thus provides a solution for continuing printing (or: recovering) after an error of printing on the first side of the medium roll that makes it possible to still print the second side images in alignment with the corresponding first side images.

In some advantageous embodiments, the at least one piece of information extracted in step h) comprises a position and/or a size of the portion removed in step f) from the medium roll. This information can advantageously be used to update the information the printer controller has about the first layout and/or the second layout, about positions of the printed images with respect each other, about positions of images to be printed still with respect to each other and/or about positions of already printed and images to be printed still with respect to each other. The printer controller may thus, based on any or all of these pieces of information, automatically amend (or: update) any of the layouts of images to be still printed (in particular the second layout on the second side of the medium roll) or parts of layouts of images to be still printed.

In some advantageous embodiments, the graphic position markers are arranged in at least one of the lateral margins of the medium roll.

In some variants of these embodiments, the graphical position markers may be arranged in both of the lateral margins of the medium roll. The graphical position markers in each of the lateral margins may be the same, or may be different from one another. Providing graphical position markers in both lateral margins advantageously increases redundancy and thus ensures that even in the event of a rather sever paper jam, enough of the graphical position markers are left readable.

In some advantageous embodiments, the graphical position markers comprise at least one ruler pattern as well as a plurality of machine-readable, graphically encoded patterns.

The ruler pattern may comprise an irregular, but preferably a regular layout of lines or other markings defining distances between each other, more preferably accompanied by numerical and/or alphanumerical markings indicating distance values between the markings, such as in a common desktop ruler. More preferably, the ruler pattern may be a ruler pattern indicating distances of millimeters, of centimeters, of inches and/or the like, optionally including even narrower-distanced markings in between.

In some advantageous embodiments, the first layout (or the first side of the medium roll) is partitioned into consecutive partitions, each of the consecutive partitions at least one of the machine-readable, graphically encoded patterns indicating a position of the respective consecutive partition with respect to the medium roll, and comprising a ruler pattern for measuring distances within the respective partition.

"Consecutive" partitions is to be understood herein as that each of the consecutive partitions spans the width of the medium roll, and the partitions are arranged one after the other (i.e. consecutively) along the longitudinal direction, or length, of the medium roll (or, in other words, along the printing direction along which the medium roll is transported during printing by the roll-to-roll printer). The partitioning of the medium roll into the consecutive partitions will in general be noticeable to a user only by the graphical position markers, if at all.

In some advantageous embodiments, the consecutive partitions are equally sized.

In some advantageous embodiments, each of the consecutive partitions comprises at least two of the machine-readable, graphically encoded patterns. Preferably, the at least two of the machine-readable, graphically encoded patterns indicate a position of the corresponding partition, and the ruler pattern indicates positions within the corresponding partition.

In this way, when an error occurs that damages one of the partitions such that one of the machine-readable, graphically encoded patterns is so damaged as to become unreadable or detached, the at least second of the machine-readable, graphically encoded patterns may still be present to provide all the relevant information.
More than two machine-readable, graphically encoded patterns may be provided per consecutive partition. It is advantageous if a balance is found between, on one hand, the striving to provide as few as possible machine-readable, graphically encoded patterns in order to save ink, and, on the other hand, the striving to provide frequent enough machine-readable, graphically encoded patterns per consecutive partitions so that, for the majority of errors, always at least one machine-readable, graphically encoded pattern is left readable.

"Readable" or "machine-readable" in the present context especially means that enough of the pattern is left for a decoding device, or decoding module, to retrieve the information stored in (or: by) the pattern at least partially or completely.

The inventors have found that balance to lie in a distance between the machine-readable, graphically encoded patterns of the same consecutive partition of preferably between 5 and 20 centimeters, in particular 10 centimeters.

In some advantageous embodiments, each machine-readable, graphically encoded pattern comprises a barcode and/or a QR code.

"QR code" is a registered trademark and designates a type of matrix barcode (or two-dimensional barcode). A QR code uses four standardized encoding modes (numeric, alphanumeric, byte/binary, and kanji) to store data efficiently; extensions may also be used. A QR code usually consists of black squares arranged in a square grid on a white background, which can be read by an imaging device such as a camera, and processed using Reed-Solomon error correction until the image can be appropriately interpreted. The required data is then extracted from patterns that are present in both horizontal and vertical components of the image. Several standards for defining QR codes are available, e.g. "1 February 2015 - ISO/IEC 18004:2015 Information - Automatic identification and data capture techniques - QR Code barcode symbology specification".

QR codes are advantageously designed with a high degree of redundancy by themselves, usually classified in one of four redundancy ratings: S, M, Q, H. This means that a considerable portions of the QR code can be destroyed, skewed, blurred, wrinkled, printed over or otherwise rendered illegible before the information stored therein is irretrievably lost. This makes QR codes a good choice for the machine-readable, graphically encoded patterns in the present invention since they are specifically intended for errors in which portions of the patterns themselves may be compromised when the section the medium roll is compromised (e.g. damaged).

In some advantageous embodiments, each machine-readable, graphically encoded pattern further indicates a unique identifier of the at least one print job ("job UID") which is intended to be printed on the respective consecutive partition. Each (or only some) machine-readable, graphically encoded pattern may comprise additional information such as information about an adjacent image ("image ID") and/or the like.

### BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:
- Fig. 1: shows a schematic flow diagram illustrating a method for continuing, after the occurrence of an error, a double-sided roll-to-roll printing process according to an embodiment of the first aspect of the present invention;
- Fig. 2 to Fig. 4: schematically show various states of a medium being printed on for better illustration of the method according to Fig. 1;
- Fig. 5: shows a schematic flow diagram illustrating a method for continuing, after the occurrence of an error, a double-sided roll-to-roll printing process according to another embodiment of the first aspect of the present invention;
- Fig. 6: schematically shows a state of the medium roll during the execution, or performing, of the method according to Fig. 5;
- Fig. 7: shows a schematic block diagram illustrating a system according to an embodiment of the fourth aspect of the present invention, a printer according to an embodiment of the third aspect of the present invention and a printer controller according to an embodiment of the second aspect of the present invention;
- Fig. 8: shows a schematic block diagram illustrating a computer program product according to an embodiment of the fifth aspect of the present invention; and
- Fig. 9: shows a schematic block diagram illustrating a non-transitory computer-readable data storage medium according to an embodiment of the sixth aspect of the present invention.

### DETAILED DESCRIPTION OF THE DRAWINGS

The present invention will now be described with reference to the accompanying drawings.

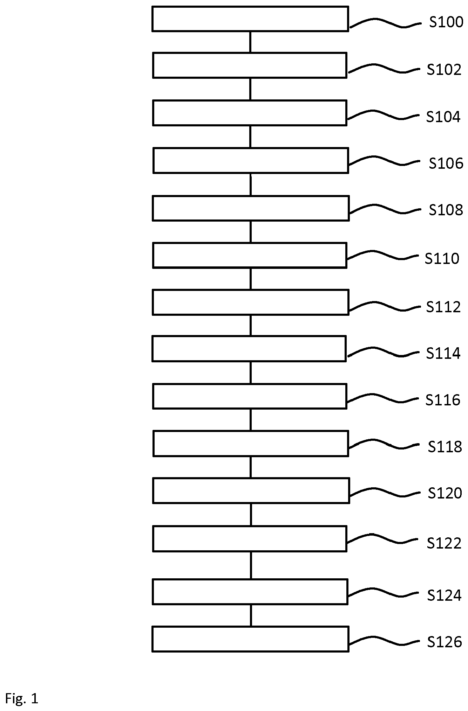

Fig. 1 shows a flow diagram illustrating a method for continuing, after the occurrence of an error, printing on a medium roll in a roll-to-roll printer in a double-sided roll-to-roll printing process wherein first a first side (or: front side) of the medium roll is marked with ink according to at least one print job and thereafter the medium roll is turned over and a second side (or: back side) of the medium roll is marked with ink according to the at least one print job such that double-sided images can be (and are) printed on the medium roll with both a front side image and a back side image (or: with front and back side).

The method described with respect to Fig. 1 is intended for cases in which an error occurs during printing on the first side of the medium roll. In those cases, the second side of the medium roll is still unprinted. Advantageously, a damaged or compromised section of the medium roll can be removed and the two parts of the medium roll created thereby can be re-attached to one another at a seam. The issue then is to adapt the printing on the second side of the medium roll to the changed layout of the front images on the first side of the medium roll, since in general the distance between two adjacent front images on both sides of the seam will be different from the originally determined, or designed, layout of the front images on the first side of the medium roll.

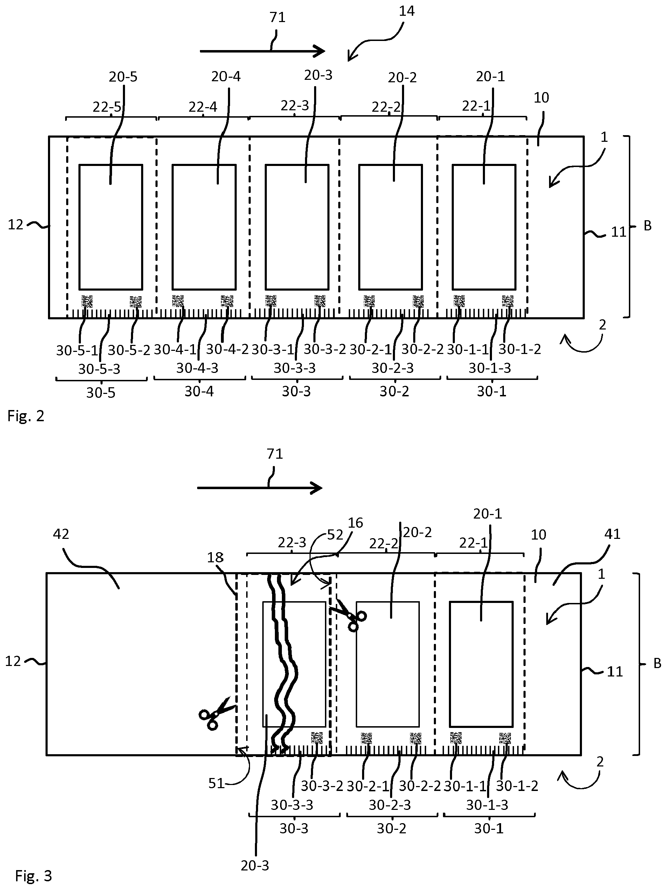

In the following, the method of Fig. 1 will be explained also with respect to Fig. 2 to Fig. 4 which schematically show states of the medium roll during the execution, or performing, of the method according to Fig. 1.

In a step S100, at least one print job to be printed is received, the at least one print job comprising at least one image with a front side image and a back side image, preferably only images with front and back sides.

In a step S102, a first layout of images to be printed on the first side of the medium roll and a second layout of images to be printed on the second side of the medium roll in order to produce double-sided images according to the at least one received print job are determined based on the at least one received print job.

Step S102 is carried out in such a way that the first layout of images comprises images to be printed on the first side of the medium roll according to the at least one print job as well as a plurality of graphical position markers indicating at least the position of the graphical position markers within the first layout.
Fig. 2 schematically shows a first layout 14 of images (more precisely: front side images) 20-1, 20-2, 20-3, 20-4, 20-5 (in the following also collectively designated as 20-i) to be printed on a first side 1 of a medium roll 10, including graphical position markers 30-1, 30-2, 30-3, 30-4, 30-5 (hereafter also sometimes collectively designated as 30-i) with individual elements 30-1-1, 30-1-2, 30-1-3, 30-2-1, 30-2-2, 30-2-3, 30-3-1, 30-3-2, 30-3-3, 30-4-1, 30-4-2, 30-4-3, 30-5-1, 30-5-2, 30-5-3, (in the following also collectively designated as 30-i-j) which will be described in more detail in the following. In Fig. 2, for better illustration only five images 20-i are shown; it will be understood that in reality usually a lot more images will be printed onto each side of the medium roll 10, e.g. dozens or hundreds of images 20-i.

The first layout 14 is divided (virtually, i.e. not physically) into consecutive partitions 22-1, 22-2, 22-3, 22-4, 22-5 (hereafter also sometimes collectively designated as 22-i). As has been described in the foregoing, "consecutive" partitions 22-i is to be understood herein as that each of the partitions 22-i spans the width B of the medium roll 10, and the partitions 22-i are arranged one after the other (i.e. consecutively) along the longitudinal direction, or length, of the medium roll 10 (or, in other words, along a printing direction 71 in which the medium roll 10 is moved during printing). The consecutive partitions 22-i thus span all the way from a leading edge 11 of the medium roll 10 to a trailing edge 12 of the medium roll 10.

Preferably, the partitions 22-i are equally-sized and preferably extend in the longitudinal direction for between 5 centimeters and 20 centimeters, preferably between 7 centimeters and 15 centimeters, more preferably for 10 centimeters.

In each of the partitions 22-i, one of the graphical position markers 30-i is arranged. Each graphical position marker 30-i comprises a ruler pattern 30-i-3 and a plurality of (in the present example two) machine-readable, graphically encoded patterns 30-i-1, 30-i-2. It is evident that also more than two machine-readable, graphically encoded patterns 30-i-1, 30-i-2 may be provided per consecutive partition 22-i, and that in some cases also providing only a single machine-readable, graphically encoded pattern 30-i-1 per consecutive partition 22-i, or some consecutive partitions 22-i, may be useful.

Each ruler pattern 30-i-3 preferably spans the whole length of the respective consecutive partition 22-i in which it is arranged and indicates positions and distances within the consecutive partition 22-i between the borders separating the consecutive partition 22-i from its neighboring consecutive partitions 22-(i-1) and 22-(i+1) to a desired degree of accuracy. For example, the ruler pattern 30-i-3 may indicate, by a respective line, each millimeter of distance between the two borders. Accordingly, it is possible to determine, to an accuracy of about 1 millimeter, each position within each consecutive partition 22-i by its ruler pattern 30-i-3.

The machine-readable, graphically encoded patterns 30-i-1, 30-i-2 in each consecutive partition 22-i are preferably realized as barcodes or, even more preferred, as QR codes (registered trademark).

Advantageously, in order to provide redundancy of information for cases in which parts of the medium roll 10 are damaged such as to render some machine-readable, graphically encoded patterns 30-i-1, 30-i-2 destroyed or unreadable, each of the machine-readable, graphically encoded patterns 30-i-1, 30-i-2 within a single consecutive partition 22-i carry the same information content (although each might carry additional information content such as an individual number), and are preferably exactly alike.

Each machine-readable, graphically encoded pattern 30-i-1, 30-i-2 comprises at least information indicating which consecutive partition 22-i the machine-readable, graphically encoded pattern 30-i-1, 30-i-2 is arranged in. Thus, the machine-readable, graphically encoded patterns 30-i-1, 30-i-2 allow to identify a specific consecutive partition 22-i, and the ruler pattern 30-i-3 therein allows to identify specific positions therein. As a result, each position within the first layout 14 of images 20-i is precisely determinable by the graphical position markers 30-i.

As an alternative, no ruler patterns 30-i-3 may be provided, and instead the machine-readable, graphically encoded patterns 30-i-1, 30-i-2 may comprise detailed information about their exact position within the corresponding consecutive partition 22-i or first layout 14 such that the information otherwise provided by the ruler patterns 30-i-3 is provided in that way.

Optionally, the machine-readable, graphically encoded patterns 30-i-1, 30-i-2 may further comprise a unique print job ID ("job UID") which allows to determine also as part of which job the machine-readable, graphically encoded pattern 30-i-1, 30-i-2 is provided, or, in other words, to which print job the image 20-i arranged next to the machine-readable, graphically encoded pattern 30-i-1, 30-i-2 belongs.

Although in Fig. 2 a situation is shown in which each consecutive partition 22-i comprises a single image 20-i, the images 20-i may be wider or narrower than the consecutive partitions 22-i such that several images 20-i may be arranged within one consecutive partition 22-i and/or one image 20-i may cover several consecutive partitions 22-i. Images 20-i may also be arranged next to one another in the width direction B of the medium roll 10 in a process called "nesting". In these cases it can be useful when each machine-readable, graphically encoded pattern 30-i-1, 30-i-2 identifies the print jobs to which adjacent images 20-i belong.

Also in Fig. 2 a variant is shown in which the graphical position markers 30-i are all arranged in a lateral margin of the medium roll 10, i.e. arranged to one side of the width B of the medium roll 10. It will be understood that for further redundancy, the graphical position markers 30-i may be mirrored (or additional graphical position markers 30-i with different information content may be provided) in the respective other lateral margin of the medium roll 10.

In some cases, for example when each consecutive partition 22-i comprises images 20-i arranged next to one another along the width direction B of the medium roll 10, graphical position markers 30-i may also be provided between some images 20-i. Since margins of the medium roll 10 are more likely to be damaged during a paper jam than the interior of the medium roll 10, such a layout provides further insurance against the graphical position markers 30-i of a consecutive partition 22-i all being rendered unreadable for a decoding device (e.g. as part of an extracting module).

Referring back to Fig. 1, in a step S104 front side images 20-i according to the at least one print job are printed on the first side 1 of the medium roll 10.

In a step S106, during printing on the first side 1 of the medium roll 10, an occurrence of an error involving damage to a section of the medium roll 10 and/or damage to at least one image 20-i on the section of the medium roll 10 is detected.

Fig. 3 schematically illustrates a situation in which printing of the first layout 14 as shown in Fig. 2 is interrupted by an error occurring during printing of a third image 20-3 from the leading edge 11 of the medium roll 10. In the exemplary situation in Fig. 3, only a first image 20-1 and a second image 20-2 from the leading edge 11 of the medium roll 10 have been printed successfully, whereas a section 16 of the medium roll 10 in the area of the third image 20-3 has been damaged. The damaged section, or section in which the at least one image is damaged, is also designated as a "compromised section" 16 herein.

In a step S108, printing is stopped after the detecting S106 of the occurrence of the error. This may happen automatically, by a stopping module of a printer controller as a result of the stopping module receiving an error signal from an error detection module of the printer controller. The stopping S108 may also be the result of an operator manually ordering a stop, e.g. by hitting a stop-button of the roll-to-roll printer after spotting an unusual occurrence such as a paper jam. The manual ordering of the stopping by the operator may be realized by the stopping module of the printer controller as well, or may be realized in a separate way, bypassing the printer controller.

Now, in order to proceed with the printing, in a step S110, a portion 18 of the medium roll 10 spanning the whole width B of the medium roll 10 is removed which comprises the compromised section 16. The portion 18 to be removed is determined by an operator, or automatically, such that, if at all possible, no part of a successfully printed image 20-1, 20-2 is removed. By virtue of the present invention, the portion 18 can be dimensioned exactly as large as necessary in each case of an error and does not have to be standard-sized to facilitate continued printing.

By removing that portion 18, the previously whole medium roll 10 is separated into two separate parts: a first part 41 that comprises, and starts with, the original leading edge 11 of the medium roll 10 and that now ends in a new in-medium trailing edge 52 to which previously the removed portion 18 was attached; and a second part 42 that comprises, and ends with, the original trailing edge 12 of the medium roll 10 and that now starts in a new in-medium leading edge 51 to which previously the removed portion 18 was attached.

In order to continue printing, the operator will then, in a step S112, attach the new in-medium trailing edge 52 of the first part 41 of the medium roll 10 to the new in-medium leading edge 51 of the second part 42 of the medium roll 10, for example by glueing or taping them together in a seam. After the re-attaching of the two parts 41, 42 of the medium roll 10, the medium roll 10 may also be designated as a "re-formed medium roll". The operator will also, if necessary, move the medium roll 10 in printing direction 71 or opposite to it in order to position the medium roll 10 such that printing can continue.

In a step S114, printing on the first side 1 of the medium roll 10 is continued with the first not successfully printed image, in the present example with the third front side image 20-3.

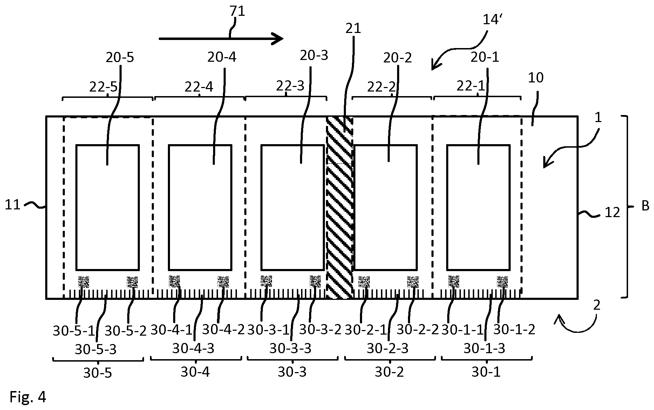

Fig. 4 schematically shows the first side 1 of the medium roll 10 after the re-attaching of the two parts 41, 42 and after the remaining images 20-3, 20-4, 20-5 after the stopping S15 have been printed.

Now, to a printer controller of the printer both the layout of all of the images 20-1, 20-2 before the seam where the two parts 41, 42 have been re-attached and the layout of all of the images 20-3, 20-4, 20-5 after the seam are known from the determined first layout 14, including their relative distances. However, a margin 21 between the second image 20-2 and the third image 20-3 is unknown at present since it is determined by the size of the removed portion 18 and the overlap used when re-attaching the two parts 41, 42.

Only the general position of the unknown margin may be known to the printer controller, as the operator may have input the corresponding information, when instructing the printer controller to continue printing in step S18, that at that point a portion 18 of the medium roll 10 has been removed. However, the method may also be implemented such that this information is not known at that point to the printer controller and that the printer controller only has the information that it shall control the printer to continue printing with the third image 20-3.

Therefore, in a step S116, a picture is captured (or: acquired) which comprises at least one machine-readable, graphically encoded pattern 30-2-1, 30-2-2 from the first part 41 of the medium 10 and at least one machine-readable, graphically encoded pattern 30-3-1, 30-3-2 from the second part 42 of the medium 10 is captured using an picture capturing device. Preferably, only the machine-readable, graphically encoded pattern 30-2-1, 30-3-2 closest to the seam on each side is captured.

The picture capturing device is preferably a mobile device such as a smartphone running a specialized app. The specialized app may be operatively connected to the printer controller and/or may be part of the printer controller.

In a step S118, from the picture captured (or: acquired, or: taken) in step S116, at least one piece of information is extracted; in the present example this means at least the distance, or margin 21, between the last complete (i.e. successfully printed) image 20-2 printed on the (first part 41 of the) first side 1 of the medium roll 10 and the first complete (i.e. successfully printed) image 20-3 printed on the (second part 42 of the) first side 1 of the medium roll 10 after the re-attaching in step S112 or alternatively the distance between the graphically encoded patterns 30-2-1, 30-2-2, 30-3-1, 30-3-2 before and after the margin 21.

For the extracting S118 of said distance, from the captured picture visually the information provided by the ruler patterns 30-2-3 and 30-3-3 of the consecutive partitions 22-2 and 22-3 (possibly either or both shortened by the removing of the portion 18) is evaluated.

Moreover, advantageously the information provided by the machine-readable, graphically encoded patterns 30-2-1, 30-3-2 in the captured picture may be read out in step S118 in order to also extract information to which consecutive partitions 22-2, 22-3 they belonged. From this information it can then be automatically determined between which two images 20-2, 20-3 the seam between the two parts 41, 42 of the medium roll 10 is located.

Thus, the printer controller can automatically be provided with all the necessary information to reconstruct the new layout of the (front side) images 20-i on the first side 1 of the medium roll 10.

In a step S120, an amended first layout 14' (i.e. an actual layout) of the images 20-i on the first side 1 of the medium roll 10 based on the extracted at least one piece of information, is determined.

In a step S122, the second layout of the back side images on the second side 2 of the medium roll 10 is amended to fit the amended first layout 14' on the first side 1 of the medium roll 10. In other words, in the present example, all margins between all back side images would remain as in the originally determined second layout (which has been determined to fit the originally determined first layout 14) except the margin between the back side image for the second front side image 20-2 and the back side image for the third front side image 20-3 which will be adjusted to equal the actual margin 21 between the second front side image 20-2 and the third front side image 20-3.

Step S118 may in some embodiments or variants be performed by the picture capturing device itself (e.g. by the app which run by the picture capturing device which has also been used to capture the picture), or may be performed by the printer controller.

The picture captured in step S116 and/or the at least one piece of information extracted in step S118 may be transmitted to the printer controller preferably wirelessly over a WLAN connection and/or a WAN connection such as the Internet. In particular, step S118 may be performed by an extracting module (implemented in hardware and/or software) of the printer controller. The extracting module may comprise a decoding module for retrieving information from the machine-readable, graphically encoded patterns 30-i-j.

Alternatively to the above, in step S102 only the first layout 14 may be determined, and the second layout may be determined later, either in step S122 or, when no error has occurred during printing of the first side 1 of the medium roll 10, automatically after the printing of the first side 1 of the medium roll 10 has completed successfully.

Then, in a step S124, after the first side 1 of the medium roll 10 has been printed successfully according to the amended layout 14', the operator may turn the medium roll 10 over such that the second side 2 of the medium roll 10 can be printed.

In a step S126, printing of the second side 2 of the medium roll 10 according to the amended, or determined, second layout of the back side images is continued.

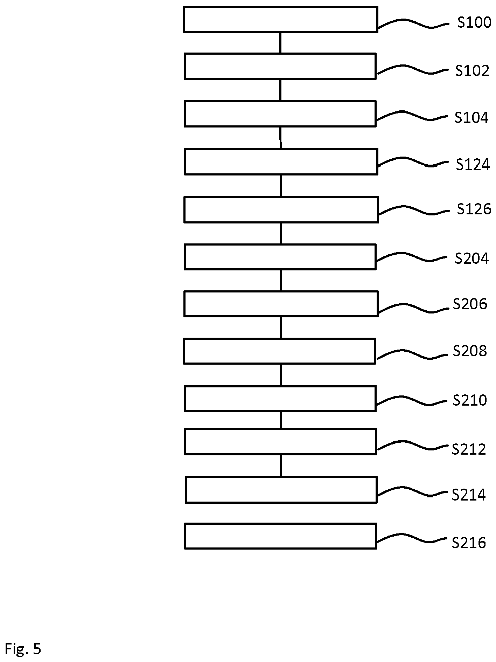

In case that an error occurs during printing of the second side 2 of the medium roll 10, the method as described in the following with respect to Fig. 5 may be applied.

Fig. 5 shows a flow diagram illustrating a method for continuing, after the occurrence of an error, printing on a medium roll in a roll-to-roll printer in a double-sided roll-to-roll printing process.

The method described with respect to Fig. 5 is intended for cases in which an error occurs during printing on the second side 2 (or: back side) of the medium roll 10. In those cases, the first side 1 (or: front side) of the medium roll 10 has already been printed. Advantageously, a portion of the medium roll 10 can be removed and the one part (of the two parts created thereby) of the medium roll 10 which contains successfully printed double-sided images can be removed immediately. The issue then is to adapt the printing on the second side 2 of the medium roll 10 such that, even after the removal of the portion, the back side images are printed in registration with their corresponding front side images 20-i. For this, it is advantageous if the exact position of the new in-medium leading edge is known, in particular with respect to the layout of the front side images already printed onto the first side of the medium roll.

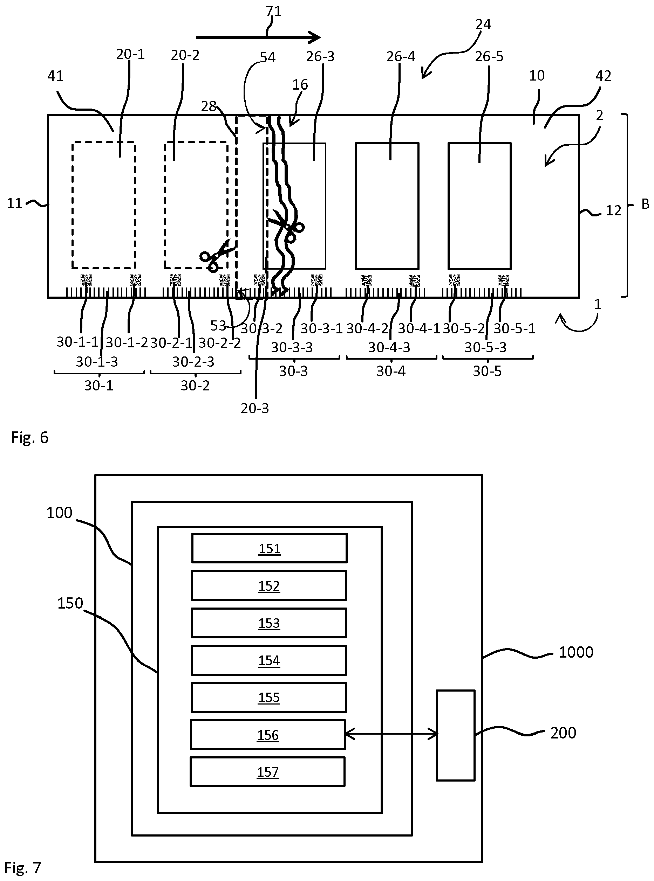

In the following, the method of Fig. 5 will be explained also with respect to Fig. 6 which schematically shows a state of the medium roll 10 during the execution, or performing, of the method according to Fig. 5.

Referring to Fig. 5, in a step S100, at least one print job to be printed is received, the at least one print job comprising at least one image with front and back side, preferably only images with front and back sides.

Steps S100 to S104, S124 and S126 are performed as described with respect to Fig. 1 to 4. In between steps S104 and S124, steps S106 to S122 may be performed optionally.

In a step S204, printing on the second side 2 of the medium roll 10 is started.

In a step S206, during printing S204 on the second side 2 of the medium roll 10, an occurrence of an error involving damage to a section 16 of the medium roll 10 and/or damage to at least one (back side) image on the section 16 of the medium roll 10 is detected.

In a step S208, printing is stopped after the detecting S206 of the occurrence of the error. This may happen automatically, by a stopping module of a printer controller as a result of the stopping module receiving an error signal from an error detection module of the printer controller. The stopping S208 may also be the result of an operator manually ordering a stop, e.g. by hitting a stop-button after spotting an unusual occurrence such as a paper jam. The manual ordering of the stopping by the operator may be realized by the stopping module of the printer controller as well, or may be realized in a separate way, bypassing the printer controller.

Fig. 6 schematically illustrates a situation in which printing of a second layout 24 is interrupted by an error occurring during printing on the second side 2 of the medium roll 10. For better understanding, the exemplary medium roll 10 and the print job shown in Fig. 6 is the same as the one shown in Fig. 2 to Fig. 5 in the foregoing, wherein the print job comprises five double-sided images with front side images 20-1, 20-2, 20-3, 20-4, 20-5 and with a corresponding and respective number of back side images 26-i.

This emphasizes again that the method of Fig. 5 may be performed after the method of Fig. 1 has been performed. In other words, at least one error occurring during printing on the second side 2 of the medium roll 10 can be detected and treated according to the method of Fig. 5 after previously at least one error occurred during printing of the first side 1 of the medium roll 10 has been detected and treated according to the method of Fig. 1. However, the method of Fig. 5 can also be applied when an error is detected during printing of the second side 2 of the medium roll 10 after printing on the first side 1 of the medium roll 10 has finished successfully without any errors.

In Fig 6, a situation is shown in which the medium roll 10 has been turned over after printing on the first side 1 of the medium roll 10 and printing of the second side 2 of the medium roll 10 has started with a back side image 26-5 of the fifth front side image 20-5, followed by a back side image 26-4 of the fourth front side image 20-4 and so on.

For the sake of improved clarity, the consecutive partitions 22-i are not shown in Fig. 6. Further, the front side images 20-1 and 20-2 are indicated by dashed lines for orientation although they are printed on the first side 1 of the medium roll 10 and would not be visible in Fig. 6 ordinarily. Furthermore, in Fig. 6 the graphical position markers 30-i are shown although they, too, are printed on the first side 1 of the medium roll 10 and would not be ordinarily visible in Fig. 6. In some embodiments, for additional redundancy the graphical position markers 30-i may also be printed on the second side 2 of the medium roll 10.

In the present example described with respect to Fig. 6, the error detected in step S206 has occurred during printing of the third back side image 26-3 of the third front side image 20-3. As a result, the third double-sided image with front side image 20-3 (successfully printed) and with back side image 26-3 (unsuccessfully printed) is in summary unsuccessfully printed and will thus advantageously be re-scheduled automatically or manually to another print job.

What is needed then is a fresh clean new leading in-medium edge in order to be able to feed that fresh clean new leading in-medium edge into the roll-to-roll printer to continue printing the back side images 26-2, 26-1 for the undamaged front side images 20-2, 20-1.

Thus, in a step S210, a portion 28 of the medium roll 10 spanning the whole width B of the medium roll 10 is removed so that a separate first part 41 of the medium roll 10 and a separate second part 42 of the medium roll 10 are created.

The first part 41 comprises, the original leading edge 11 of the medium roll 10 (which is now, for printing on the second side 2 of the medium roll 10, the trailing edge) and a new in-medium leading edge 53 to which previously the removed portion 28 was attached; and a second part 42 that comprises the original trailing edge 12 of the medium roll 10 (which is now, for printing on the second side 2 of the medium roll 10, the leading edge) and a new in-medium trailing edge 54 to which previously the removed portion 28 was attached.

Thus, the first part 41 which comprises the front side images 20-1, 20-2 which are not yet provided with their corresponding back side images is advantageously provided with a new, sharp and clean in-medium leading edge 53 for continuing the printing process. The compromised section 16 may be, completely or partially, part of the removed portion 28 and/or may partially or completely remain on the second part 42 which comprises finished double-sided images. Preferably, the compromised section 16 of the medium roll 10, in particular when it is damaged by the error (e.g. paper jam), is arranged at the second part 42 of the medium roll 10 and is not part of the removed section 28. Note though that the compromised section 16 may comprise uncured ink in which case it might be preferred to remove the compromised section 16, for example as part of the removed portion 28. However, handling a removed portion 28 for scanning with uncured ink may also be undesirable. In that case the removed portion 28 and the comprised section 16 may be two separate portions.

In a step S212, a picture is captured (or: acquired), using an picture capturing device, of the removed section 28 which comprises at least partially at least one graphical position marker 30-i.

For this reason, it is preferable that the removed section 28 does not comprise parts of the compromised section because this ensures that the graphical position marker 30-i parts on the removed section 28 are intact and readable. In the above described embodiment, the image will be taken from the first side 1 of the removed section 28 as the graphical position markers 30-i are printed only on the first side 1 of the medium roll 10. However, in some variants also the second layout of images on the second side 2 of the medium roll 10 may be determined such that it comprises graphical position markers 30-i similarly (or identically) to the ones on the first side 1 of the medium roll 10. In that case, the picture in step S212 may also be captured from the second side of the removed section 28.

In the example shown in Fig. 6, the removed section 28 comprises a part of the ruler pattern 30-3-3 from the first side 1 of the medium roll 10 as well as the machine-readable, graphically encoded pattern 30-3-2.

QR codes are advantageous as machine-readable, graphically encoded patterns in particular also because they by themselves offer a level of redundancy, i.e. a part of the QR code may be missing and it may still be possible to reconstruct the message encoded therein. Since modern printers are able to print with high resolution, e.g. 600 dpi or even 1200 dpi, it is possible to configure the machine-readable, graphically encoded patterns 30-i-1, 30-i-2 as highly redundant data repositories (such as QR codes with "M", "Q" or even "H" redundancy ratings) which still do not require large amounts of ink and space.

Capturing the picture in step S212 may even be performed automatically, e.g. by a picture capturing device (or: camera) built into the printer, e.g. after commands have been issued, either by an operator or by a printer controller, to move the medium roll 10 in a certain way and to cut it in a certain way. The printer may in that case be configured to first move the section 28 to be removed to the camera so that the picture can be captured, and to then proceed with the removing S210 of the portion 28.

However, the picture capturing device is preferably a mobile device such as a smartphone running a specialized app. The specialized app may be operatively connected to the printer controller and/or may be part of the printer controller.

In a step S214, from the picture captured (or: acquired) in step S212, at least one piece of information is extracted, in the present example at least the position of the new in-medium leading edge 53 of the first part 41 of the medium roll 10 with respect to the front side images 20-i printed on the first side 1 of the medium roll 10, or, in other words, with respect to the first layout 14 or the amended first layout 14' printed on the first side 1 of the medium roll 10.

For example, in the described variant with the graphical position marker 30-i comprising a ruler pattern 30-i-3 and two machine-readable, graphically encoded patterns 30-i-1, 30-i-2, it is sufficient when a picture of the ruler pattern 30-i-3 at the edge of the portion 28 previously connected to the new in-medium leading edge 53 is captured, together with at least one of the two machine-readable, graphically encoded patterns 30-i-1, 30-i-2 to identify the correct consecutive partition 22-i.

The size of the removed portion 28 is preferably set dependent on the design of the graphical position markers 30-i and is more preferably set such that the removed portion 28 necessarily comprises at least one machine-readable, graphically encoded pattern 30-i-1, 30-i-2 of the graphical position markers 30-i. For example, when the consecutive partitions 22-i are set to be 10 centimeters wide and comprise two machine-readable, graphically encoded patterns 30-i-1, 30-i-2 then setting the size of the removed portion 28 to 10 centimeters ensures that at least one fully intact machine-readable, graphically encoded pattern 30-i-1, 30-i-2 will be present in the removed portion 28.

Step S214 may be performed by or on the picture capturing device itself (e.g. by the app which run by the picture capturing device which has also been used to capture the picture), or may be performed by the printer controller.

The picture captured in step S212 and/or the at least one piece of information extracted in step S214 may be transmitted to the printer controller preferably wirelessly over a WLAN connection and/or a WAN connection such as the Internet. In particular, step S214 may be performed by an extracting module (implemented in hardware and/or software) of the printer controller.

In a step S216 printing of the back side images on the second side 2 of the medium roll 10 is continued based on the extracted information about the position of the new in-medium leading edge 53 with respect to the images printed on the first side 1 of the medium roll 10 such that the back side images are printed in registration with their corresponding front side images 20-i.

Fig. 7 shows a schematic block diagram illustrating a system 1000 according to an embodiment of the fourth aspect of the present invention, a roll-to-roll printer 100 according to an embodiment of the third aspect of the present invention and a printer controller 150 according to an embodiment of the second aspect of the present invention.

The printer controller 150 is configured to perform the method according to an embodiment of the first aspect of the present invention. The roll-to-roll printer 100 comprises the printer controller 150. The system 1000 comprises the roll-to-roll printer 100. Optionally, the system 1000 may also comprise a mobile device realized as, or configured to comprise, an picture capturing device 200. As has been described in the foregoing, the picture capturing device 200 may be configured for wireless communication with the printer controller 150.

The printer controller 150 may in some embodiments not be part of the roll-to-roll printer 100 but may be realized in a remote way, e.g. implemented by a cloud computing platform configured to communicate with the roll-to-roll printer 100 and/or the picture capturing device 200 wirelessly and/or by wire, e.g. via the Internet.

Alternatively or additionally, it may be possible for an operator to enter the information extracted from one or more pictures captured using the picture capturing device 200 into the printer controller 150 (or into another entity communicatively connected to the printer controller 150) manually, e.g. using a keyboard or touchscreen.

The printer controller 150 may, according to advantageous embodiments, comprise an input module 151, a layout module 152, a control module 153, an error detection module 154, a stopping module 155, a communication module 156 and optionally an extracting module 157.

The input module 151 is configured to receive at least one print job to be printed by the printer 100, e.g. as has been described in the foregoing with respect to step S100.

The layout module 152 is configured to determine, based on the at least one received print job, a first layout 14 of images 20-i to be printed on the first side 1 of the medium roll 10, e.g. as has been described in the foregoing with respect to the step S102. In particular, the layout module 152 may be configured to also determine a second layout of images to be printed on the second side 2 of the medium roll 10 based on the at least one received print job.

The layout module 152 is further configured to determine the first layout 14 such that the first layout of images comprises a plurality of graphical position markers 30-i indicating at least the position of the graphical position markers 30-i within the first layout 14. As has been described, the graphical position markers 30-i may also indicate additional information. The graphical position markers 30-i may in particular be designed as has been described in the foregoing with respect to the methods of Fig. 1 and Fig. 4.

The control module 153 is configured to control the printer 100 to print images according to the at least one print job on the first side 1 and the second side 2 of the medium roll consecutively, i.e. not simultaneously but first on the first side 1 and then on the second side 2.

The error detection module 154 is configured to detect, during printing, an occurrence of an error involving damage to a section 16 of the medium roll 10 and/or damage to at least one image on the section 16 of the medium roll 10, e.g. as has been described in the foregoing with respect to the step S106 and/or to the step S206.

The stopping module 155 is configured to stop printing after the detecting of the occurrence of the error, e.g. as has been described in the foregoing with respect to the step S108 and/or to the step S208.

The communication module 156 is configured to receive a captured picture of at least part of at least one of the graphical position markers 30-i from the picture capturing device 200 and/or to receive a piece of information extracted from said captured picture by the picture capturing device 200, e.g. as has been described in the foregoing with respect to the steps S116 and S118 and/or with respect to step S212 and S214.

The printer controller 150 may further comprise an extracting module 157 configured to extract at least one piece of information from the captured image received by the communication module 156, e.g. as has been described in the foregoing with respect to the step S118 and/or with respect to the step S212.

The extracting module 157 may be provided in case that the communication module 156 is configured to receive only the captured picture (i.e. when no extracting of information is performed by the picture capturing device 200 itself) or may be provided in case that additional information is to be extracted from the captured picture (i.e. exceeding what has already been extracted by the picture capturing device 200) or may be provided in case that some picture capturing devices 200 are able to extract the information themselves and others are not.

The control module 153 is further configured to control the printer to continue, after stopping, printing of the at least one print job on the medium roll, wherein at least printing on the second side of the medium roll is controlled and/or amended by the control module based on the extracted at least one piece of information, e.g. as has been described in the foregoing with respect to the step S126 and/or with respect to the step S216.

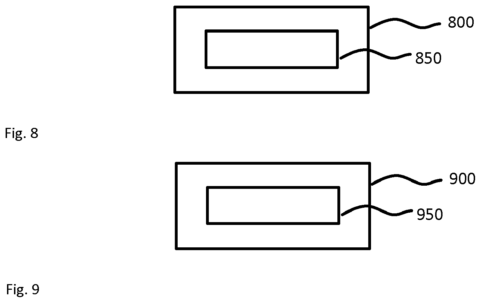

Fig. 8 shows a schematic block diagram illustrating a computer program product 800 according to an embodiment of the fifth aspect of the present invention. The computer program product 800 comprises executable code 850 configured to, when executed, perform the method according to an embodiment of the first aspect, e.g. as described with respect to the system 1000, the printer controller 150, or the method described with respect to Fig. 1 and/or Fig. 4 and/or according to any of the variants and modifications of the system 1000, the printer controller 150 and/or of the method described herein.

Fig. 9 shows a schematic block diagram illustrating a non-transitory computer-readable data storage medium 900 according to an embodiment of the sixth aspect of the present invention. The non-transitory computer-readable data storage medium 900 comprises executable code 950 configured to, when executed, perform the method according to an embodiment of the first aspect, e.g. as described with respect to the system 1000, the printer 100, the printer controller 150, or the method described with respect to Fig. 1 and/or Fig. 4 and/or according to any of the variants and modifications of the system 1000, the printer 100, the printer controller 150 and/or of the method described herein.

The non-transitory computer-readable data storage medium 900 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

While detailed embodiments of the present invention are disclosed herein, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

It will be evident that the described embodiments may be varied in many ways. All such modifications as would be evident to one skilled in the art starting from what is explicitly described are intended to be included.

One basic idea of the invention may be summarized as follows: graphical position markers are printed onto a first side of a medium roll in a double-sided roll-to-roll printing process in addition to the images according to the print job. When an error such as a paper jam occurs, during printing on the first side of the medium roll and/or during printing of the second side of the medium roll, then at least one piece of information is extracted from the graphical position markers in order to ensure that the images printed on the second side of the medium roll are printed in registration with the corresponding images printed on the first side of the medium roll. Methods are provided both for recovering after an error during printing on the first side and after an error during printing on the second side. In addition, a system, a printer, and a printer controller configured for performing said methods are provided.

## Claims

1. A method for continuing, after the occurrence of an error, printing on a medium roll (10) in a roll-to-roll printer in a double-sided roll-to-roll printing process wherein first a first side (1) of the medium roll (10) is marked with marking material according to at least one print job and thereafter the medium roll (10) is turned over and a second side (2) of the medium roll (10) is marked with marking material according to the at least one print job such that double-sided images are printed on the medium roll (10) with both front side images (20-i) and back side images (26-i),
comprising at least the steps of:
a) receiving (S100) at least one print job to be printed;
b) determining (S102), based on the at least one received print job, a first layout (14) of front side images (20-i) to be printed on the first side (1) of the medium roll (10),
wherein the first layout (14) comprises front side images (20-i) to be printed on the first side (1) of the medium roll (10) according to the at least one print job as well as a plurality of graphical position markers (30-i) indicating at least the position of the graphical position markers (30-i) within the first layout;
c) printing (S104, S204) at least one image according to the at least one print job on the first and/or the second side (2) of the medium roll (10);
d) detecting (S106, S206), during printing, an occurrence of an error involving damage to a section (16) of the medium roll (10) and/or damage to at least one image (20-3, 26-3) on the section (16) of the medium roll (10);
e) stopping (S108, S208) printing (S104, S204) after the detecting (S106, S206) of the occurrence of the error;
f) removing (S110, S210) a portion (18, 28) of the medium roll (10), creating a separate first part (41) of the medium roll (10) with a new in-medium trailing edge (52, 54) of the medium roll (10) and a separate second part (42) of the medium roll (10) with a new in-medium leading edge (51, 53) of the medium roll (10);
g) capturing (S116, S212) an image of at least part of at least one of the graphical position markers (30-i) using an picture capturing device (200);
h) extracting (S118, S214) at least one piece of information from the captured picture;
i) continuing (S126, S216) printing of the at least one print job on the medium roll (10) after the stopping in step e), wherein at least printing (S204, S216) on the second side (2) of the medium roll (10) is controlled and/or amended based on the at least one extracted piece of information.

2. The method of claim 1,
wherein the occurrence of the error is detected (S106) in step d) during printing (S104) on the first side (1) of the medium roll (10);
the method further comprising a step of
k) attaching (S112) the in-medium trailing edge (52) of the first part (41) of the medium roll (10) to the in-medium leading edge (51) of the second part (42) of the medium roll (10);
wherein in step i) the printing (S126) on the first side (1) of the medium roll (10) is continued after the attaching (S112) in step k), starting with any previously unsuccessfully printed images (20-3) and including printing of at least one of the graphical position markers;
wherein in step g), after the attaching (S112) in step k), an image comprising at least partially at least one graphical position marker from the first part (41) of the medium and at least partially at least one graphical position marker (30-i) from the second part (42) of the medium is captured using the picture capturing device (200);
wherein the at least one piece of information extracted in step h) comprises a distance between a last complete image (20-2) printed on the first side (1) of the medium roll (10) before the stopping (S108) in step e) and a first complete image (S0-3) printed on the first side (1) of the medium roll (10) after the continuing (S126) of the printing (S104) in step i);
wherein the method further comprises the step of:
determining (S122) or amending a second layout (24) of back side images (26-i) to be printed on the second side (2) of the medium roll (10) taking into account the at least one piece of information extracted in step h) to fit a realized first layout (14') of the front side images (20-i) on the first side (1) of the medium roll (10).

3. The method of claim 1 or claim 2,
wherein the at least one piece of information extracted in step h) comprises a position and/or a size of the portion (18, 28) removed in step f) from the medium roll (10).

4. The method of claim 3,
wherein the occurrence of the error is detected (S206) in step d) during printing on the second side (2) of the medium roll (10) after printing on the first side (1) of the medium roll (10);
wherein in step f) a portion (28) with a predetermined size of the medium roll (10) is removed (S210);
wherein the picture captured in step g) comprises at least one graphical position marker (30-i) on the removed portion (28) of the medium roll (10) at least partially;
further comprising the step of:
determining, from the at least one piece of information extracted in step h) a position of the new in-medium leading edge (53) of the medium roll (10) with respect to the front side images (20-i) printed on the first side (1) of the medium roll (10),
wherein printing (S216) on the second side (2) of the medium roll (10) is continued in step i) in registration with the front side images (20-i) on the first side (1) of the medium roll (10) based on the determined position of the new in-medium leading edge (53).

5. The method of any of claims 1 to 4,
wherein the graphical position markers (30-i) are arranged in at least one of the lateral margins of the medium roll (10).

6. The method of any of claims 1 to 5,
wherein the graphical position markers (30-i) comprise at least one ruler pattern (30-i-3) as well as a plurality of machine-readable, graphically encoded patterns (30-i-j).

7. The method of claim 6,
wherein the first layout (14) is partitioned into consecutive partitions (22-i), each of the consecutive partitions (22-i) comprising at least one of the machine-readable, graphically encoded patterns (30-i-j) indicating a position of the respective consecutive partition (22-i) with respect to the first layout (14), and comprising a ruler pattern (30-i-3) for measuring distances within the respective consecutive partition (22-i).

8. The method of claim 6 or 7,
wherein the consecutive partitions (22-i) are equally sized.

9. The method of any one of claims 6 to 8,
wherein each of the consecutive partitions (22-i) comprises at least two of the machine-readable, graphically encoded patterns (30-i-j); wherein the at least two of the machine-readable, graphically encoded patterns (30-i-j) indicate a position of the corresponding partition (22-i), and wherein the ruler pattern (30-i-3) indicate at least one position within the corresponding partition (22-i).

10. The method of any of claims 6 to 9,
wherein the size of each of the consecutive partitions (22-i) is between 5 and 20 centimeters.

11. The method of any of claims 6 to 10,
wherein each machine-readable, graphically encoded pattern (30-i-j) comprises a barcode and/or a QR code.

12. The method of any of claims 6 to 11,
wherein each machine-readable, graphically encoded pattern (30-i-j) further indicates a unique identifier of the at least one print job which is intended to be printed on the respective consecutive partition (22-i).

13. A computer program product (900) comprising executable program code (950) comprised on a non-transitory, computer readable medium and configured to, when executed on a processor, perform the method according to the method of any of claims 1 to 12.

14. A printer controller (150) for a roll-to-roll printer (100) for use in the method according to any of claims 1 to 12,
comprising:
an input module (151) configured to receive at least one print job to be printed by the roll-to-roll printer (100);
a layout module (152) configured to determine (S102), based on the at least one received print job, a first layout (14) of front side images (20-i) to be printed on the first side (1) of the medium roll (10),
wherein the first layout (14) comprises first side images (20-i) to be printed on the first side (1) of the medium roll (10) according to the at least one print job as well as a plurality of graphical position markers (30-i) indicating at least the position of the graphical position markers (30-i) within the first layout (14);
a control module (153) configured to control the roll-to-roll printer (100) to print images (20-i, 22-i) according to the at least one print job on the first side (1) and the second side (2) of the medium roll (10) consecutively;
an error detection module (154) configured to detect (S106, S206), during printing (S104, S204), an occurrence of an error involving damage to a section (16) of the medium roll (10) and/or damage to at least one image (20-3, 26-3) on the section (16) of the medium roll (10);
a stopping module (155) configured to stop (S108, S208) printing (S104, S204) after the detecting (S106, S206) of the occurrence of the error;
a communication module (156) configured to receive a captured picture of at least one of the graphical position markers (30-i) at least partially from an picture capturing device (200); and
an extracting module (157) configured to extract (S118, S214) from the received captured picture at least one piece of information;
wherein the control module (153) is further configured to control the roll-to-roll printer (100) to continue (S126, S216), after stopping (S108, S208), printing of the at least one print job on the medium roll (10), wherein at least printing (S04, S16) on the second side (2) of the medium roll (10) is controlled and/or amended by the control module (153) based on the extracted at least one piece of information.

15. A roll-to-roll printer (100) comprising a printer controller (150) according to claim 14.
